# EUROPÄISCHE PATENTSCHRIFT

(11) **EP 1 249 648 B1**
(45) Veröffentlichungstag und Bekanntmachung des Hinweises auf die Patenterteilung: **03.05.2006**
(21) Anmeldenummer: 02000839.7
(22) Anmeldetag: 15.01.2002
(51) Int. Cl.: F16J 15/32

(54) **Radialwellendichtring**
Shaft seal
Joint à lèvre radiale

(30) Priorität: 10.04.2001 DE 10117881
(43) Veröffentlichungstag der Anmeldung: 16.10.2002
(73) Patentinhaber: Carl Freudenberg KG, 69469 Weinheim (DE)
(72) Erfinder: Wolf, Hans-Otto, 69483 Wald-Michelbach (DE); Kochendörfer, Hans-Peter, 69469 Weinheim (DE); Vogt, Rolf, 68723 Oftersheim (DE)

(56) Entgegenhaltungen:
- EP-A- 0 980 998
- EP-A- 1 026 428
- DE-A1- 19 740 822
- PATENT ABSTRACTS OF JAPAN Bd. 2000, Nr. 14, 5. März 2001 (2001-03-05) & JP 2000 310341 A (NOK CORP), 7. November 2000 (2000-11-07)

## Beschreibung

### Technisches Gebiet

Die Erfindung betrifft einen Radialwellendichtring umfassend einen Stützring aus zähhartem Werkstoff, an dem ein Dichtkörper unlösbar befestigt ist, wobei der Dichtkörper eine axial in Richtung einer abzudichtenden Welle vorwölbbare, elastisch deformierbare Dichtlippe umfasst, die eine Oberflächenprofilierung aufweist, die bei bestimmungsgemäßer Verwendung des Radialwellendichtrings unter radialer Vorspannung an die Welle dichtend anlegbar ist, wobei die Oberflächenprofilierung umlaufende, nutförmige Ausnehmungen in der Dichtlippe aufweist, die einen schraubengangförmigen Rückförderdrall bilden, um bei Rotation der Welle eine Rückförderung von Leckageflüssigkeit in den abzudichtenden Raum zu bewirken und wobei der Dichtkörper und die Dichtlippe einstückig gebildet sind und aus einem elastomeren Werkstoff bestehen.

### Stand der Technik

In der älteren europäischen Patentanmeldung EP 1 299 662 A1 (Stand der Technik gemäß Art. 54(3) EPÜ) ist ein solcher Radialwellendichtring offenbart.

Außerdem ist offenbart, dass im Bereich der Anlage zwischen der Dichtlippe und der Mantelfläche der Welle im Schraubengang des Rückförderdralls ein Verschlusskörper angeordnet ist, der einen statischen Dichtpunkt bildet und den Schraubengang in einen zum abzudichtenden Raum offenen Hohlraum und in einen zum Außenraum offenen Hohlraum teilt.

Aus der DE 197 40 822 ist ein Radialwellendichtring bekannt, mit einem an einem Stützkörper befestigten elastischen Dichtteil, welches aus einer Mischung aus einem Elastomer und einem Fluorthermoplast besteht. Der Anteil Fluorthermoplasts in der Mischung ist größer als 30 Gew.%. Das elastomermodifizierte Material ist verglichen mit einem reinen

Fluorthermoplast wie Polytetrafluorethylen zwar vergleichsweise elastischer, kann aber bei exzentrisch laufenden Wellen ein Austreten von Flüssigkeit nicht verhindern. Von Nachteil ist ferner die relativ aufwendige Herstellung der Mischung aus Elastomer und Fluorthermoplast, dem auch Vemetzungsmittel zugesetzt werden. Das aus dieser Mischung hergestellte Dichtelement kann zwar unmittelbar an das Gehäuse beziehungsweise an den Stützkörper anvulkanisiert werden, aufgrund der Anteile des Fluorelastomers sind aber die Hafteigenschaften beeinträchtigt. Außerdem ist die Fertigung schwierig bis unmöglich. Statt der herkömmlichen Linienberührung der konventionellen Dichtkante gebräuchlicher Radialwellendichtringe, liegt hier eine Flächenberührung einer Dichtlippe vor, weshalb ein Rückförderdrall unverzichtbar ist

Radialwellendichtringe mit einem Stützring und einer sich im Wesentlichen in radialer Richtung erstreckenden kreisförmigen Dichtscheibe aus Polytetrafluorethylen sind aus den deutschen Offenlegungsschriften 198 211 46, DE 195 390 57 und DE 360 766 2 bekannt. Auch hier weist die Dichtlippe an der zur Welle anliegenden Oberfläche eine Oberflächenprofilierung auf, die als Rückförderdrall ausgebildet ist und das abzudichtende Medium bei Drehung der Welle in den abzudichtenden Raum zurückbefördert. Eine Dichtscheibe aus Polytetrafluorethylen weist aber grundsätzlich geringe elastische Eigenschaften auf. Insbesondere bei unrund laufenden Wellen und/oder bei einem vibrierenden Gehäuse werden auf den dynamischen Dichtspalt Schwingungen übertragen, und als Folge der geringen Elastizität liegt die Dichtlippe nicht mehr ausreichend elastisch federnd auf der Mantelfläche der Welle auf. So können die übertragenen Stöße beziehungsweise die Exzentrizität der Welle zur Leckage führen. Zu einem Austreten der abzudichtenden Flüssigkeit kann es aber auch im Stillstand kommen. Bedingt durch die Betriebstemperatur verringert sich häufig die

Viskosität des abzudichtenden Mediums so stark, dass bei stillstehender Welle/ oder in Abhängigkeit des Ölstandes/oder bei geringem Überdruck, die Flüssigkeit durch den schraubengangförmigen Rückförderdrall aus dem abzudichtenden Innenraum nach außen austritt. Bei der Herstellung ist von Nachteil, dass die Befestigung der aus reinem Polytetrafluorethylen bestehenden Dichtlippe eine aufwendige Behandlung dieses Dichtteils, gegebenenfalls auch des Stützkörpers, erforderlich macht. Gebräuchlich sind chemische Ätz-Verfahren mit aggressiven und umweltschädlichen Chemikalien, wie beispielsweise in flüssigem Ammoniak oder ätherischem Polyacryl gelöstem Alkalimetall. Von Nachteil ist auch ein frühzeitiger Verschleiß der Mantelfläche der abzudichtenden Welle, da die PTFE-Dichtlippe häufig Zusätze von Glasfasern enthält die äußerst abrasiv wirken. In der Kraftfahrzeugindustrie erhebt sich zusehends die Forderung nach hochwertigen Dichtelementen mit einer Eignung für längere Ölwechselintervalle und geringen Herstellungskosten, und bei denen in Zukunft die Laufleistung ausgeweitet werden soll, bei schweren neueren Lastwagen bereits auf eine Million Kilometer.

Aus de.r JP 2000 310341 A ist ein weiterer Radialwellendichtring bekannt, mit einem Stützring aus zähhartem Werkstoff, an dem ein Dichtkörper aus gummielastischem Werkstoff unlösbar befestigt ist Der Dichtkörper ist axial in Richtung einer abzudichtenden Welle vorgewölbt und weist eine elastisch deformierbare Dichtlippe auf, die eine Oberflächenprofilierung hat, die bei bestimmungsgemäßer Verwendung des Radialwellendichtrings unter radialer Vorspannung an die Welle dichtend anlegbar ist. Die Dichtlippe ist derart gestaltet, dass sich während der bestimmungsgemäßen Verwendung eine Rückförderung von Leckageflüssigkeit in den abzudichtenden Raum ergibt.

Aus der EP 1 026 428 A2 ist ein Radialwellendichtring bekannt, bei dem der Dichtkörper und die Dichtlippe aus zwei voneinander abweichenden Werkstoffen bestehen. Die Dichtlippe besteht bevorzugt aus PTFE. Die

Dichtlippe weist auf ihrer der Welle zugewandten Seite eine erste Oberflächenprofilierung auf, die auf der dem abzudichtenden Raum zugewandten Seite durch zumindest ein Rückförderelement gebildet ist, wobei auf der dem abzudichtenden Raum axial abgewandten Seite des Rückförderelements zumindest eine Staublippe angeordnet ist In axialer Richtung, zwischen dem Rückförderelement und der Staublippe, ist ein kreisringsförmiger, in sich geschlossene Dichtwulst angeordnet, der die Welle umfangsseitig dichtend umschließt. Dadurch wird bei stillstehender Welle eine statische Abdichtung erreicht.

### Darstellung der Erfindung

Der Erfindung liegt die Aufgabe zugrunde, einen gattungsgemäßen Radialwellendichtring so weiter zu bilden, dass dieser sowohl bei einer Drehbewegung der Welle als auch bei Stillstand der Welle verbesserte Dichtungseigenschaften aufweist, eine Leckage auch bei exzentrisch laufender Welle verhindert und dabei besonders einfach und kostensparend herstellbar ist.
Diese Aufgabe wird erfindungsgemäß mit den Merkmalen von Anspruch 1 gelöst Auf vorteilhafte Ausgestaltungen nehmen die Unteransprüche Bezug.

Zur Lösung der gestellten Aufgabe ist es vorgesehen, dass der Rückförderdrall auf der dem abzudichtenden Raum abgewandten Seite in eine ringförmige, in sich geschlossene Ausnehmung mündet und durch diese begrenzt ist, wobei im Bereich der Anlage zwischen der Dichtlippe und der Mantelfläche der Welle im Schraubengang des Rückförderdralls ein Verschlusskörper angeordnet ist, der einen statischen Dichtpunkt bildet und den Schraubengang in einen zum abzudichtenden Raum offenen Hohlraum und in einen zum Außenraum offenen Hohlraum teilt.

Ausschlaggebend dafür, dass der Dichtkörper und die Dichtlippe einstückig gebildet sind und aus einem elastomeren Werkstoff bestehen, ist die Erwägung, dass für den dynamischen Dichtmechanismus des Radialwellendichtrings die Strömung im Dichtspalt maßgeblich ist und nicht eine möglichst große radiale Anpresskraft des Dichtelementes, die dann aufgrund der entstehenden Reibungswärme einen Werkstoff mit einer hohen Temperaturbeständigkeit erforderlich macht. Der Entwicklungsrichtung im Stand der Technik entgegen wird gemäß der Erfindung als Werkstoff nicht ein Fluorthermoplast sondern eine weichelastische Dichtlippe aus Elastomer vorgeschlagen. Diese ist so ausgebildet, dass sie materialeinheitlich und einstückig in einen Dichtkörper übergeht, der an einem Stützkörper unlösbar befestigt ist. Überraschenderweise ist die gegenüber PTFE geringere Temperaturbeständigkeit des Elastomers hinsichtlich der Lebensdauer des Radialwellendichtrings nicht von Nachteil: Aufgrund der Elastizität des Werkstoffs bildet sich schon bei geringen Drehzahlen der Welle zwischen der elastisch nachgebenden Dichtlippe und der Mantelfläche der Welle eine Spaltströmung aus. Die Dichtlippe "schwimmt auf". Obwohl der Reibungskoeffizient zwischen Elastomer und Metall größer ist als der Reibungskoeffizient zwischen PTFE und Metall, entsteht im Dichtspalt aufgrund dieses Strömungseffektes eine geringere Reibungswärme. Die vom abzudichtenden Innenraum nach außen gerichtete kapillare Strömung wird durch die vom Drall der Oberflächenprofilierung erzeugten und nach innen gerichteten Schleppströmung verhindert. Auch dann, wenn die Welle exzentrisch läuft, bleibt bei der erfindungsgemäß ausgebildeten elastisch nachgebenden Dichtlippe die dichtende Wirkung dieses Dralls erhalten. Erschütterungen, die sich vom Gehäuse oder in Richtung Dichtspalt fortpflanzen, werden durch das elastisch nachgiebige Material gedämpft und führen nicht zur Leckage. Die spiralige Oberflächenprofilierung lässt sich durch spritzgießbares Elastomer genauer herstellen und ist daher in ihrer Wirkung der durch Prägen oder Stechen der PTFE-Dichtscheibe hergestellten Spirale überlegen. Der erfindungsgemäß aus einem Elastomer bestehende Dichtkörper lässt sich samt Profilierung der Dichtlippe in einem Arbeitsschritt durch Vulkanisieren ohne aufwendige, umweltbelastende Oberflächenbehandlungsverfahren herstellen. Es können die bei Elastomeren konventionell anwendbaren Prozesse herangezogen werden. Damit ist der erfindungsgemäße Radialwellendichtring für die Fertigung in großen Stückzahlen geeignet.

Die Oberflächenprofilierung wird aus umlaufenden nutförmigen Ausnehmungen in der Dichtlippe gebildet, die einen schraubengangförmigen Rückförderdrall bilden. Das in der elastomeren Dichtlippe ausgebildete Rückfördergewinde besitzt bereits bei geringen Wellendrehzahlen eine sehr gute Rückförderwirkung.

Außerdem ist von Vorteil, dass im Bereich der Anlage zwischen der Dichtlippe und der Mantelfläche der Welle im Schraubengang des Rückförderdralls ein Verschlusskörper angeordnet ist, der den Schraubengang in einen zum abzudichtenden Raum geöffneten Hohlraum und in einen zum Außenraum geöffneten Hohlraum teilt. Bei Stillstand der Welle bildet der Verschlusskörper eine statische Dichtung und verhindert das Austreten des abzudichtenden Mediums durch den Fördergang des Gewindes. Bei Drehung der Welle, bei der sich eine Spaltströmung zwischen Welle und Dichtlippe ausbildet, ist dieser statische Dichtpunkt außer Funktion und die vom Rückförderdrall erzeugte und nach innen gerichtete Schleppströmung wirkt der nach außen gerichteten Kapillarströmung entgegen. Dies ist insbesondere dann von Bedeutung, wenn bei Kraftfahrzeugen aufgrund des häufigen Wechsels zwischen Teil- und Vollast der Motoren die Temperatur und damit auch die Viskosität des Motoröls starken Schwankungen unterworfen ist. Aufgrund des elastischen Verhaltens der elastomeren Dichtlippe wird sowohl im Stillstand durch die Anlage des Verschlusspunktes wie auch im Betrieb durch die Wirkung des Rückfördergewindes an der Kontaktfläche zwischen Dichtlippe und Welle ein Austreten von Öl zuverlässig verhindert. Als besonders günstig hat es sich erwiesen, wenn die nutförmigen Ausnehmungen die Hohlräume mit im Wesentlichen dreieckförmigen Querschnitt begrenzen und die dem abzudichtenden Raum abgewandte Seite im wesentlichen senkrecht zur Achse der Welle verläuft. Auf diese Weise entsteht schon bei niedrigen Umfangsgeschwindigkeiten ein tragfähiger Flüssigkeitsfilm zwischen Dichtlippe und Welle und eine nach innen gerichtete Schleppströmung, die eine vom Ölraum nach außen gerichtete Kapillarströmung verhindert. Für Elastomere die üblicherweise bei Radialwellendichtringen eingesetzt werden hat sich eine Dichtlippe mit einer Dicke von ≤ 5 mm als vorteilhaft erwiesen. Hierbei ist es günstig, wenn das Verhältnis, gebildet aus dem Durchmesser der abzudichtenden Welle und dem Innendurchmesser der nicht vorgestülpten Dichtlippe 1,03 - 1,08 ist. Dadurch weist die Dichtlippe ein sehr gutes Nachfolgevermögen hinsichtlich Wellenschwingungen und -verlagerungen auf. Dies ist insbesondere bei der Abdichtung von Kurbelwellen von Bedeutung, die aufgrund der nichtausgeglichenen Massenkräfte und des Verbrennungsvorgangs Biege- und Torsionsschwingungen unterworfen sind. Aufgrund des sich zwischen Dichtlippe und Mantelfläche der Welle ausbildenden Ölfilms verursacht das Dichtsystem nur ein geringes Reibmoment und damit nur eine geringe Erwärmung des Dichtungsmaterials. Als elastomere Werkstoffe geeignet sind:
Nitrierter Acrylat Kautschuk (ACM), Acrylnitril-Butadien-Kautschuk (NBR) oder Fluorpolimerisat (FPM).

Es ist ferner von Vorteil, wenn die Dichtlippe an der von der Welle abgewandten Oberfläche eine zweite Oberflächenprofilierung aufweist. Diese kann durch nutförmige Ausnehmungen gebildet sein, die ein U-förmiges Raupenprofil bilden. Durch das Raupenprofil entsteht eine Vergrößerung der Oberfläche, wodurch lokale reibungsbedingte Erwärmung im elastomeren Werkstoff sehr gut an das abzudichtende Medium abgegeben werden kann. Es ist aber auch möglich, die nutförmigen Ausnehmungen in der zweiten Oberflächenprofilierung identisch mit dem Querschnitt der Ausnehmungen an der zur Welle hin liegenden Oberflächenprofilierung auszubilden. Die Dichtlippe ist in axialer Richtung beiderseits so vorwölbbar, dass in Anlage mit der Mantelfläche der abzudichtenden Welle eine in den Innenraum gerichtete Rückförderwirkung entsteht. Diese öffnet den Einsatz eines identisch ausgebildeten Radialwellendichtrings an in axialer Richtung einander entgegengesetzten Enden einer Welle, wobei jeder dieser Radialwellendichtringe eine Förderwirkung des abzudichtenden Mediums in Richtung des abzudichtenden Raumes bewirkt.

Hinsichtlich der Herstellungskosten ist es von Vorteil, wenn der Stützring einstückig als Blechring ausgebildet ist und einen von einem Axialvorsprung abgestuften Abschnitt mit einem Radialvorsprung aufweist. In Spritzgusstechnik lässt sich so der Dichtkörper kostengünstig so ausbilden, dass er mit dem Gehäuse eine statische Dichtung bildet. Dabei überdeckt der elastomere Werkstoff die zum Außenraum liegende Stirnseite des Radialvorsprungs und bildet eine Ummantelung des abgestuften Abschnittes.

Insbesondere bei der Anwendung in Nutzfahrzeugen ist es von Vorteil, wenn im Bereich der Stirnseite des Radialvorsprungs am Dichtkörper eine Vorschaltdichtung und/oder eine Schmutzlippe angeordnet ist. Dadurch wird die Hauptdichtung gegenüber dem Außenraum und eintretende Schmutzpartikel geschützt.

Hierbei ist von Vorteil, dass die Vorschaltdichtung als Staubdichtung ausgebildet ist und aus einem offenporigen Werkstoff, besonders bevorzugt aus einem Vliesstoff, besteht. Das Vlies wirkt als Staubfilter und hält eindringende, abrasiv wirkende Partikel wie beispielsweise Kupplungsabrieb von der Hauptdichtung fern. Gleichzeitig kann durch den porösen Werkstoff kein Unterdruck zwischen der Hauptdichtung und der vorgeschalteten Staublippe aufgrund des durch die Förderwirkung im Dichtspalt verursachten Ansaugeffektes entstehen. Auf einfache Weise kann bei der Herstellung die Vorschaltdichtung durch Spritzgießen haftend mit dem Dichtkörper verbunden werden.

### Kurzbeschreibung der Zeichnungen:

Zur weiteren Erläuterung der Erfindung wird auf die Zeichnungen Bezug genommen, in deren Figuren eine bevorzugte Ausführungsform gemäß der Erfindung schematisch dargestellt ist. Es zeigen:
- Fig. 1: im Axialschnitt eine Hälfte eines Radialwellendichtringes gemäß dem Stand der Technik
- Fig 2: im Axialschnitt eine Hälfte eines ersten Ausführungsbeispiels eines erfindungsgemäßen Radialwellendichtringes,
- Fig. 3: einen Detailschnitt im Bereich der Anlage zwischen Dichtlippe und der Welle aus Fig. 2 in stark vergrößerter Darstellung,

Fig. 4 einen weiteren Detailschnitt eines 2. Ausführungsbeispiels, ähnlich dem Ausführungsbeispiel aus Fig. 2, wobei die Dichtlippe entgegen dem abzudichtenden Raum 3 vorgewölbt ist und auf der dem abzudichtenden Raum abgewandten Stirnseite eine Schmutz-Dichtlippe aufweist, die an die Oberfläche der abzudichtenden Welle dichtend anlegbar ist.

### Ausführung der Erfindung

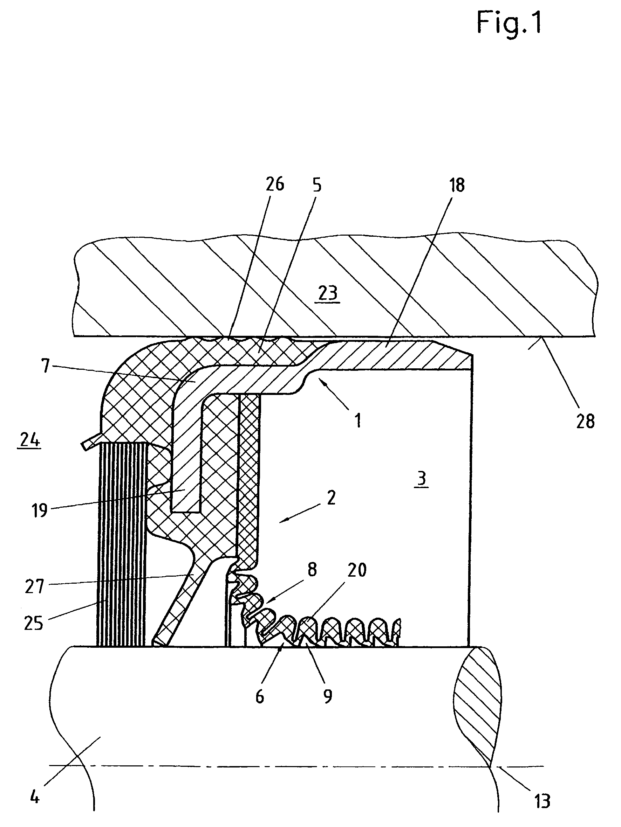

Die Fig. 1 zeigt die Hälfte eines Axialschnitts eines Radialwellendichtringes gemäß dem Stand der Technik. Dieser ist in einem Gehäuse 23 angeordnet und umschließt radialinnenseitig die Welle 4 und trennt dabei den abzudichtenden Raum 3 von einem Außenraum 24. Das Dichtsystem besteht aus einem Stützring 1 mit einem elastomerummantelten Radialvorsprung 19 an dem eine Dichtlippe 2 unlösbar befestigt ist. Die in axialer Richtung der abzudichtenden Welle 4 vorgewölbte elastische Dichtlippe 20 bildet im Bereich der Berührungsfläche einen dynamischen Dichtspalt. Die Dichtlippe 2 ist an dem mit elastomerummantelten Radialvorsprung 19 des Stützrings 1 haftend befestigt, wobei radial außenseitig die Ummantelung 5, an der gegebenenfalls Rillen 26 ausgebildet sind, mit der zylindrischen Mantelfläche 28 des Gehäuses 23 eine statische Dichtung bildet. Wie Fig. 1 zeigt, ist der Lippenhauptdichtung 20 eine Vorschaltdichtung 25 vorgeschaltet. Die Elastomerummantelung des Radialvorsprungs 19 weist zwischen Vorschalt- und Hauptdichtung eine Schmutzlippe 27 auf. In axialer Streckung gliedert sich der Stützring 1 in einen Axialvorsprung 18 und einen abgestuften Abschnitt 7. Die zur abzudichtenden Welle 4 liegende Oberfläche der Dichtscheibe 20 weist eine Oberflächenprofilierung 6 auf. Diese wird durch nutförmige Ausnehmungen 9 gebildet, die einen schraubengangförmigen Rückförderdrall 29 bilden. Auch die von der abzudichtenden Welle 4 abgewandten Oberflächenseite der Dichtscheibe 20 ist mit einer Profilierung 8 versehen. Auch dieses Raupenprofil wird durch nach außen hin offene Ausnehmungen 10 gebildet. Der Schraubengang beider Oberflächenprofilierungen 6 und 8 ist versetzt angeordnet, wodurch die Dichtlippe 20 in axialer Richtung der Welle 4 vorwölbbar ist und die Mantelfläche der Welle 4 in radialer Vorspannung umschließt. Als Werkstoff für die in axialer Richtung der Welle 4 vorgewölbte scheibenförmige Dichtlippe 20 werden ausschließlich thermoplastische Kunststoffe verwendet, bevorzugt Polytetrafluorethylene und artverwandte Polymere. Diese Werkstoffe besitzen nur geringe elastische Eigenschaften und sind relativ verformungssteif. Der vorzugsweise verwendete Werkstoff Polytetrafluorethylen bietet sich durch seine hohe Temperatur- und Chemikalienbeständigkeit gegen aggressive Medien an. Statt der Linienberührung der Dichtkante eines konventionellen Radialwellendichtrings liegt eine Flächenberührung vor. Der Einsatz dieses Dichtsystems in der Automobilindustrie erfordert daher grundsätzlich einen Rückförderdrall über die gesamte Kontaktfläche zur Welle 4. Eine Dichtlippe 20 aus Polytetrafluorethylen ist nahezu verschleißfrei, da nach einem gewissen Anfangsverschleiß die an der Welle 4 anliegenden Bereiche der Oberfläche glasieren und dadurch sehr widerstandsfähig werden. Der Werkstoff PTFE besitzt einen sogenannten "Memory-Effekt" wodurch ohne zusätzliche Unterstützung durch eine aufgelegte Spiral- oder Ringwendelfeder die Lippe durch die materialbedingte Vorspannung an der Mantelfläche der drehenden Welle 4 anliegt. Allerdings ist diese Radialkraft bei der Montage der Welle 4 relativ hoch, und nimmt dann mit zunehmender Erwärmung im Betrieb durch kriechendes PTFE irreversibel ab. Dies bedeutet, dass gerade dann die Wirkung des Dichtsystems geringer wird, wenn aufgrund betriebsbedingter Erwärmung das Öl dünnflüssig geworden ist. Der Querschnitt des Rückfördergewindes, der bei diesem Werkstoff durch Prägen hergestellt wird, lässt sich nur mit begrenzter Genauigkeit vorgeben.

Aus strömungstechnischer Sicht optimale Raupenquerschnitte lassen sich durch das Prägeverfahren nicht verwirklichen. Dies ist insbesondere dann von Nachteil, wenn aufgrund der Temperatureinwirkung oder des Kriechverhaltens des Werkstoffes der Rückförderdrall 29 nicht immer in optimaler Anlage mit der abzudichtenden Welle 4 liegt. Ausschlaggebend für die Förderwirkung ist, die Anzeige aktiver Fördergewindegänge und die Größe und die Form des Querschnitts der Ausnehmungen 9. Die Dicke der Dichtlippe 20 wirkt sich auf die Aufdehnung oder Überdeckung aus. Für die Dichtwirkung ist eine bestimmte radiale Vorspannung erforderlich, was eine bestimmte minimale Dicke der Dichtlippe 20 fordert. Dadurch ist das Nachfolgevermögen der Dichtlippe 20 hinsichtlich periodischer dreidimensionaler Wellenverlagerungen, wie sie insbesondere bei Kurbelwellen von Verbrennungskraftmotoren auftreten, beschränkt. Durch die geringe Elastizität der Dichtlippe 20 kann insbesondere dünnflüssiges Motoröl in den Außenraum 26 gelangen. Die gute chemische Beständigkeit von Polytetrafluorethylen ist bei der Herstellung von Nachteil, da für eine adhäsive Verbindung mit einem elastomeren Dichtkörper aggressive und umweltschädliche Oberflächenbehandlungsverfahren erforderlich sind.

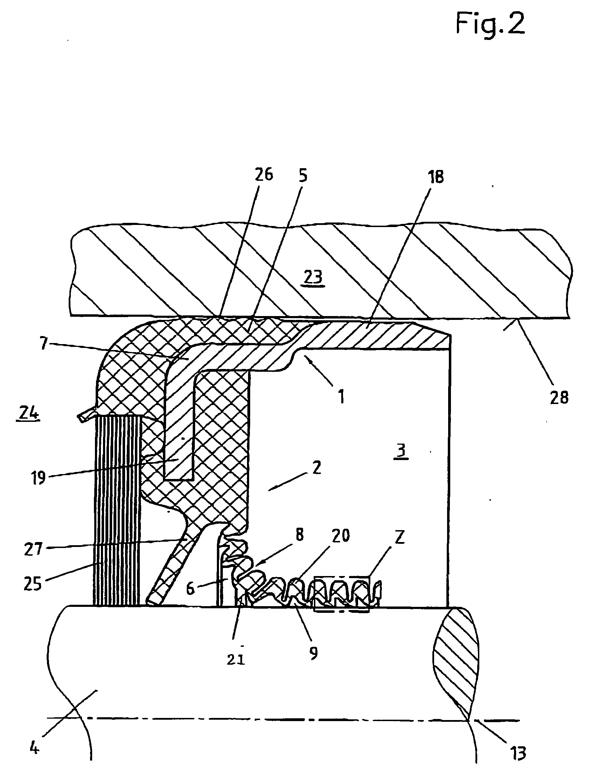

Eine bevorzugte Ausführungsform des erfindungsgemäßen Radialwellendichtrings ist in Fig. 2 in einem halben Axialschnitt gezeigt. Wie durch Vergleich mit Fig. 1 leicht erkennbar, ist die Dichtlippe 20 einstückig und materialeinheitlich aus einem Werkstoff gefertigt. Erfindungsgemäß wird hierfür ein elastomerer Werkstoff verwendet, wodurch der Dichtkörper 2 sehr kostensparend in einem Arbeitsschritt an den Stützring 1 anvulkanisiert werden kann. Da aggressive Chemikalien bei der Herstellung wegfallen, ist der Fertigungsprozess umweltfreundlich. In Spritzgusstechnik lassen sich die nutförmigen Ausnehmungen 9 des Rückförderdralls 29 sehr genau den strömungstechnischen Erfordernissen für eine wirkungsvolle nach innen gerichtete Schleppströmung im Dichtspalt dimensionieren. Auch wenn die Achse 13 der abzudichtenden Welle 4 Schwingungen ausübt, kann die Dichtlippe 20 aufgrund ihres sehr guten Nachfolgevermögens diesen Bewegungen der drehenden Welle 4 folgen und die in den Innenraum 3 gerichtete Förderwirkung aufrechterhalten. Verglichen mit einer Dichtlippe 20 aus Polytetrafluorethylen bei der eine Leckage bereits bei einem Radialschlag der Welle 4 von einigen 10tel Millimetern auftritt, lässt die erfindungsgemäße elastomere Dichtlippe 20 eine exzentrische Verlagerung der Wellenachse 13 unter 3-4 mm zu, ohne dass das abzudichtende Medium aus dem Innenraum 3 in den Außenraum 24 austritt. Durch die Elastizität des verwendeten elastomeren Werkstoff ist das Dichtsystem also robust hinsichtlich Verlagerungen und Schiefstellungen der Wellenachse 13 gegenüber der zylindrischen Mantelfläche 28 des Gehäuses 23. Trotz des vergleichsweise zu PTFE höheren Reibwertes des Elastomers ist die anfallende Verlustleistung in der Dichtlippe 20 sehr gering, da sich schon bei niedrigen Umfangsgeschwindigkeiten zwischen Dichtlippe und Mantelfläche der Welle 4 ein tragfähiger Flüssigkeitsfilm ausbildet. Folge davon ist ein sehr geringes Reibmoment und ein günstiges Verschleißverhalten des Dichtungssystems. Das Oberflächenprofil 6 der Dichtlippe 20 lässt sich hinsichtlich strömungstechnischen Gesichtspunkten sehr genau in Spritzgusstechnik fertigen. In an sich bekannter Weise kann die erfindungsgemäße Dichtlippe 20 durch eine Schmutzlippe 27 und eine Vorschaltdichtung 25 gegenüber dem Außenraum zusätzlich geschützt sein. Der Stützring 1 kann wie in Fig. 1 bereits dargestellt, mit einem Axialvorsprung 18, einem abgestuften Abschnitt und einem Radialvorsprung 19 versehen sein. Auch in der erfindungsgemäßen Ausführungsform umhüllt das Elastomer den Axialvorsprung 18 und den abgestuften Abschnitt 7 des Stützkörpers 1. Die statische Dichtung zum Gehäuse 23, die durch die Ummantelung 5 und gegebenenfalls durch Rillen 26 gebildet wird, geht damit einstückig und materialeinheitlich über in die Lippenhauptdichtung 20. Das Vulkanisationswerkzeug ist einfach aufgebaut, konventionell entformbar und der erfindungsgemäße Radialwellendichtring mit geringen Kosten herstellbar. Die Dichtlippe 20 kann in an sich bekannter Weise auch an ihrer von der Welle 4 abgewandten Oberflächenseite eine zweite Oberflächenprofilierung 8 aufweisen, wodurch die Vergrößerung der Oberfläche zu einer weiteren Reduktion der geringen Verlustwärme in der Dichtlippe 20 beiträgt.
In Fig. 2 ist ein Abschnitt der Dichtlippe 20 im Bereich der Anlage mit der Mantelfläche der Welle 4 gestrichelt hervorgehoben und mit Z bezeichnet.

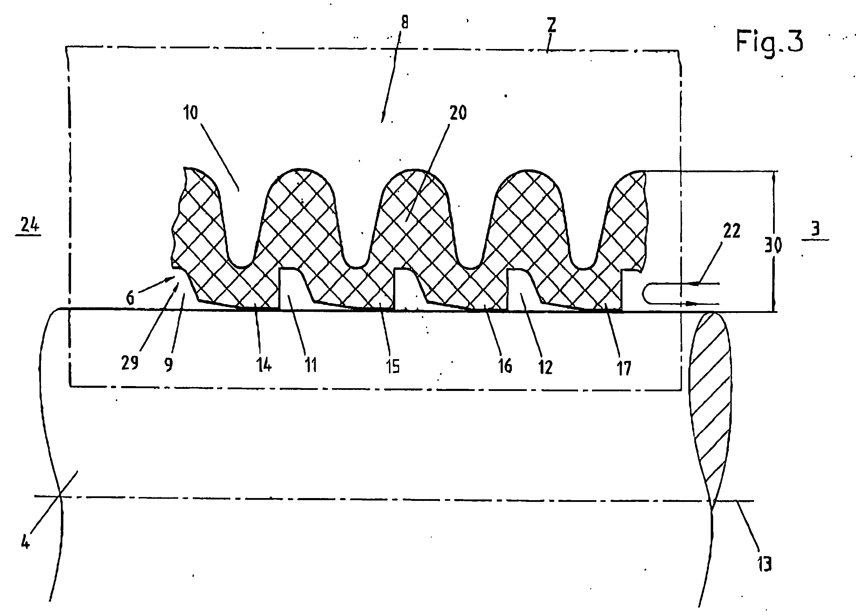

Fig. 3 zeigt diesen Bereich in einem Detailschnitt in einer stark vergrößerten Darstellung. Die Dichtlippe 20 liegt durch vollständige Windungen 14, 15, 16, 17 an der Mantelfläche der um die Achse 13 drehbaren Welle 4 an. Das Oberflächenprofil 6 weist Ausnehmungen 9 auf, die einen Rückförderdrall 29 bilden. Zwischen den Windungen 15 und 16 ist ein Verschlusskörper 21 angeordnet, der den Schraubengang des Rückförderdralls 29 teilt. Es entsteht ein Hohlraum 11, der zum Außenraum 24 geöffnet ist und ein Hohlraum 12, der zum abzudichtenden Innenraum 3 hin geöffnet ist. Der Verschlusskörper 21 stellt einen statischen Dichtpunkt dar der verhindert, dass bei nichtdrehender Welle 4 das abzudichtende Medium aus dem abzudichtenden Innenraum 3 in den Außenraum 24 austritt. In Spritzgusstechnik kann dieser statische Dichtpunkt sehr einfach ausgebildet werden, in dem punktförmig der Schraubengang des Rückfördergewindes 29 durch einen Elastomerpfropfen unterbrochen wird. Bei sich drehender Welle 4 ist dieser statische Dichtpunkt 21 ohne Bedeutung. Es überwiegt im Dichtspalt die durch die Raupenprofilierung 29 verursachte Schleppströmung, die eine nach außen gerichtete Kapillarströmung des abzudichtenden Mediums verhindert. Die nach außen gerichtete Kapillarströmung und die durch die Drehbewegung der Welle hervorgerufene in den Innenraum 3 gerichtete Schleppströmung ist durch den Umkehrpfeil 22 dargestellt. Der Querschnitt der Hohlräume 11 und 12 ist im gezeigten Ausführungsbeispiel der Fig. 3 durch dreieckförmige Abschnitte begrenzt. Hierbei verläuft die im abzudichten Raum abgewandte Seite des Hohlraumquerschnitts im Wesentlichen senkrecht zu Achse 13 der Welle 4. Auf diese Weise wird eine sehr effizient Förderwirkung bereits bei niedrigen Wellendrehzahlen erzielt. Die Dicke 30 der Dichtlippe 20 ist vorteilhaft kleiner als 1,5 mm. Dadurch lässt sich ein sehr gutes, dynamisches Nachfolgevermögen der flexiblen Dichtlippe 20 erzielen. Im bevorzugten Ausführungsbeispiel der Fig. 3 ist die von der abzudichtenden Welle abgewandte Oberfläche der Dichtlippe 20 mit U-förmigen, nach außen hin geöffneten Ausnehmungen, die spiralförmig verlaufen und einen Raupendrall bilden, versehen. Die reibungsbedingte Erwärmung der Dichtlippe wird durch die verbesserte Wärmeabfuhr an das abzudichtende Medium weiter verringert. Anstelle des U-förmigen Raupendralls kann selbstverständlich an dieser Oberflächenseite der Dichtlippe 20 ein Rückförderdrall ausgebildet sein, was den erfindungsgemäßen Radialwellendichtring universell für unterschiedliche Drehrichtungen beziehungsweise an entgegengesetzten Enden einer Welle verwendbar macht.

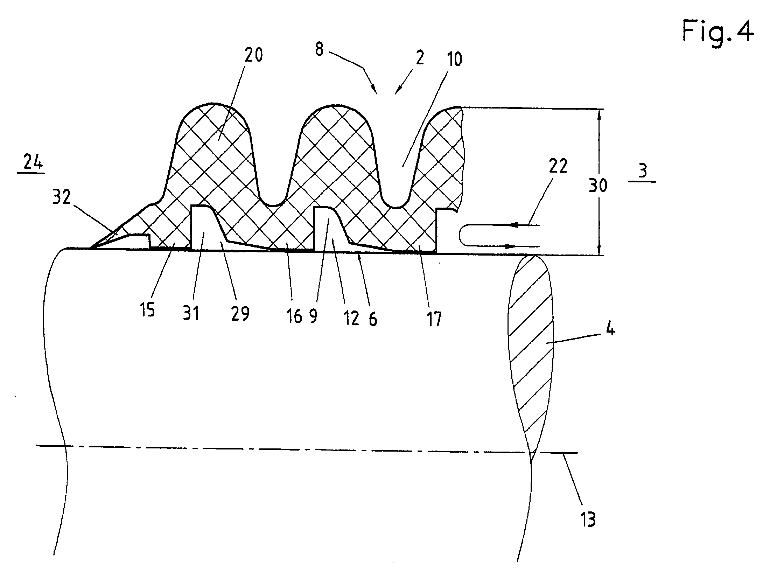

In Fig. 4 ist ein Ausführungsbeispiel gezeigt, ähnlich dem Ausführungsbeispiel aus Fig. 2. Die Dichtlippe 20 ist entgegen dem abzudichten Raum 3 vorgewölbt. Außerdem weist die Dichtlippe 20 auf der dem abzudichten Raum 3 abgewandten Stirnseite eine Schmutzdichtlippe 32 auf, die an die Oberfläche der abzudichtenden Welle dichtend anlegbar ist. In diesem Ausführungsbeispiel mündet der Rückförderdrall 29 auf der dem abzudichtenden Raum 3 abgewandten Seite in eine ringförmige, in sich geschlossene Ausnehmung 31 und ist durch diese begrenzt.

## Patentansprüche

1. Radialwellendichtring, umfassend einen Stützring (1) aus zähhartem Werkstoff, an dem ein Dichtkörper (2) unlösbar befestigt ist, wobei der Dichtkörper (2) eine axial in Richtung einer abzudichtenden Welle (4) vorwölbbare, elastisch deformierbare Dichtlippe (20) umfasst, die eine Oberflächenprofilierung (6) aufweist, die bei bestimmungsgemäßer Verwendung des Radialwellendichtrings unter radialer Vorspannung an die Welle (4) dichtend anlegbar ist, wobei die Oberflächenprofilierung (6) umlaufende, nutförmige Ausnehmungen (9) in der Dichtlippe (20) aufweist, die einen schraubengangförmigen Rückförderdrall (29) bilden, um bei Rotation der Welle (4) eine Rückförderung von Leckageflüssigkeit in den abzudichtenden Raum (3) zu bewirken und wobei der Dichtkörper (2) und die Dichtlippe (20) einstückig gebildet sind und aus einem elastomeren Werkstoff bestehen, **dadurch gekennzeichnet, dass** der Rückförderdrall auf der dem abzudichtenden Raum (3) abgewandten Seite in eine ringförmige, in sich geschlossene Ausnehmung (31) mündet und durch diese begrenzt ist und dass im Bereich der Anlage zwischen der Dichtlippe (20) und der Mantelfläche der Welle (4) im Schraubengang des Rückförderdralls (29) ein Verschlusskörper (21) angeordnet ist, der einen statischen Dichtpunkt bildet und den Schraubengang in einen zum abzudichten Raum (3) offenen Hohlraum (12) und in einen zum Außenraum (24) offenen Hohlraum (11) teilt.

2. Radialwellendichtring nach Anspruch 1, **dadurch gekennzeichnet, dass** die Dichtlippe (20) auf der dem abzudichtenden Raum (3) abgewandten Stirnseite eine Schmutz-Dichtlippe (32) aufweist, die an die Oberfläche der abzudichtenden Welle (4) dichtend anlegbar ist.

3. Radialwellendichtring nach einem der Ansprüche 1 oder 2, **dadurch gekennzeichnet, dass** die nutförmigen Ausnehmungen (9) die Hohlräume (11, 12) mit im Wesentlichen dreieckförmigen Querschnitt begrenzen und die dem abzudichtenden Raum (3) abgewandte Seite im Wesentlichen senkrecht zur Achse (13) der Welle (4) verläuft.

4. Radialwellendichtring nach einem der vorstehenden Ansprüche, **dadurch gekennzeichnet, dass** die Dichtlippe (20) eine Dicke (30) von kleiner oder gleich 1,5 mm aufweist

5. Radialwellendichtring nach einem der vorstehenden Ansprüche, **dadurch gekennzeichnet, dass** das Verhältnis, gebildet aus dem Durchmesser der abzudichtenden Welle (4) und dem Innendurchmesser der nicht vorgewölbten Dichtlippe (20) 1,03 bis 1,08 ist.

6. Radialwellendichtring nach einem der vorstehenden Ansprüche, **dadurch gekennzeichnet, dass** der elastomere Werkstoff durch nitriertem AcrylatKautschuk (ACM), Acrylnitril-Butadien-Kautschuk (NBR) oder aus Fluorpolymerisaten (FPM) gebildet wird.

7. Radialwellendichtring nach einem der vorstehenden Ansprüche, **dadurch gekennzeichnet, dass** die Dichtlippe (20) an der von der Welle (4) abgewandten Oberfläche eine zweite Oberflächenprofilierung (8) aufweist.

8. Radialwellendichtring nach Anspruch 7, **dadurch gekennzeichnet, dass** der Querschnitt der nutförmigen Ausnehmungen (10) in der zweiten Oberflächenprofilierung (8) U-förmig oder identisch mit dem Querschnitt der Ausnehmungen (9) in der Oberflächenprofilierung (6) ausgebildet ist.

9. Radialwellendichtring nach einem der vorstehenden Ansprüche, **dadurch gekennzeichnet, dass** der Stützring (1) einstückig als Blechring ausgebildet ist und einen von einem Axialvorsprung (18) abgestuften Abschnitt (7) mit einem Radialvorsprung (19) aufweist.

10. Radialwellendichtring nach Anspruch 9, **dadurch gekennzeichnet, dass** der Dichtkörper (2) sich über die zum Außenraum (24) liegende Stirnseite des Radialvorsprungs (19) erstreckt und durch Ummantelung (5) des abgestuften Abschnittes (7) eine statische Dichtung zum Gehäuse (23) bildet.

11. Radialwellendichtring nach Anspruch 10, **dadurch gekennzeichnet, dass** im Bereich der Stirnseite des Radialvorsprungs (19) am Dichtkörper (2) eine Vorschaltdichtung (25) und / oder eine Schmutzlippe (27) angeordnet ist .

12. Radialwellendichtring nach Anspruch 11 , **dadurch gekennzeichnet, dass** die Vorschaltdichtung (25) als Staubdichtung ausgebildet ist und aus einem offenporigen Werkstoff, besonders bevorzugt aus einem Vliesstoff, besteht

13. Radialwellendichtring nach einem der Ansprüche 11 oder 12, **dadurch gekennzeichnet, dass** die Vorschaltdichtung (25) haftend mit dem Dichtkörper (2) verbunden ist.

## Claims

1. Radial shaft sealing ring, comprising a supporting ring (1) of hard and tough material, on which a sealing body (2) is undetachably fastened, the sealing body (2) comprising an elastically deformable sealing lip (20) which can be made to protrude axially in the direction of a shaft (4) to be sealed and has a surface profiling (6), which can be brought to bear in a sealing manner against the shaft (4) under radial prestress when the radial shaft sealing ring is used as intended, the surface profiling (6) having peripheral, groove-shaped recesses (9) in the sealing lip (20), which form a helical return spiral (29), in order when the shaft (4) rotates to bring about a return of leakage fluid into the space (3) to be sealed, and the sealing body (2) and the sealing lip (20) being formed in one piece and consisting of an elastomeric material, **characterized in that** the return spiral opens out on the side facing away from the space (3) to be sealed into an annular, enclosed recess (31) and is bounded by the latter, and **in that** arranged in the helix of the return spiral (29), in the region of the contact between the sealing lip (20) and the outer surface of the shaft (4), is a closure body (21), which forms a static sealing point and divides the helix into a hollow space (12) that is open towards the space (3) to be sealed and a hollow space (11) that is open towards the outside space (24).

2. Radial shaft sealing ring according to Claim 1,
**characterized in that** the sealing lip (20) has on the end face facing away from the space (3) to be sealed a dirt sealing lip (32), which can be brought to bear in a sealing manner against the surface of the shaft (4) to be sealed.

3. Radial shaft sealing ring according to either of Claims 1 and 2, **characterized in that** the groove-shaped recesses (9) bound the hollow spaces (11, 12) with an essentially triangular cross section and the side facing away from the space (3) to be sealed runs essentially perpendicularly in relation to the axis (13) of the shaft (4).

4. Radial shaft sealing ring according to one of the preceding claims, **characterized in that** the sealing lip (20) has a thickness (30) of less than or equal to 1.5 mm.

5. Radial shaft sealing ring according to one of the preceding claims, **characterized in that** the ratio formed by the diameter of the shaft (4) to be sealed and the inside diameter of the protruded sealing lip (20) is 1.03 to 1.08.

6. Radial shaft sealing ring according to one of the preceding claims, **characterized in that** the elastomeric material is formed by nitrided polyacrylate rubber (ACM), acrylonitrile-butadiene rubber (NBR) or from fluoropolymers (FPM).

7. Radial shaft sealing ring according to one of the preceding claims, **characterized in that** the sealing lip (20) has on the surface facing away from the shaft (4) a second surface profiling (8).

8. Radial shaft sealing ring according to Claim 7, **characterized in that** the cross section of the groove-shaped recesses (10) in the second surface profiling (8) is U-shaped or formed identically to the cross section of the recesses (9) in the surface profiling (6).

9. Radial shaft sealing ring according to one of the preceding claims, **characterized in that** the supporting ring (1) is formed in one piece as a sheet-metal ring and has a portion (7) which is stepped down from an axial projection (18) and has a radial projection (19).

10. Radial shaft sealing ring according to Claim 9, **characterized in that** the sealing body (2) extends over the end face of the radial projection (19) lying towards the outside space (24) and forms a static seal with respect to the housing (23) by enclosure (5) of the stepped-down portion (7).

11. Radial shaft sealing ring according to Claim 10, **characterized in that** an auxiliary seal (25) and/or a dirt lip (27) is arranged in the sealing body (2) in the region of the end face of the radial projection (19).

12. Radial shaft sealing ring according to Claim 11, **characterized in that** the auxiliary seal (25) is formed as a dust seal and consists of an open-cell material, with particular preference of a nonwoven fabric.

13. Radial shaft sealing ring according to either of Claims 11 and 12, **characterized in that** the auxiliary seal (25) is adhesively connected to the sealing body (2).

## Revendications

1. Joint à lèvre radiale, comprenant une bague de support (1) en matériau tenace, sur laquelle un corps d'étanchéité (2) est fixé de façon inséparable, le corps d'étanchéité (2) comprenant une lèvre d'étanchéité (20) déformable élastiquement et précintrable axialement en direction d'un arbre à rendre étanche (4), qui présente un profilage de surface (6) qui peut s'appliquer de façon étanche sur l'arbre (4) avec une précontrainte radiale lors de l'utilisation conforme du joint à lèvre radiale, le profilage de surface (6) présentant des évidements périphériques (9) en forme de rainures dans la lèvre d'étanchéité (20), qui forment un canal de retour hélicoïdal en forme de pas de vis pour provoquer (29), lors de la rotation de l'arbre (4), un renvoi du liquide de fuite dans l'espace à rendre étanche (3) et le corps d'étanchéité (2) et la lèvre d'étanchéité (20) étant formés d'un seul tenant et étant constitués d'un matériau élastomère, **caractérisé en ce que** le canal de retour hélicoïdal débouche sur le côté situé à l'opposé de l'espace à rendre étanche (3) dans un évidement annulaire (31) par nature fermé et est limité par celui-ci, et **en ce que**, dans la région de l'appui entre la lèvre d'étanchéité (20) et la surface latérale de l'arbre (4), un corps de fermeture (21) est disposé dans le filet du canal de retour hélicoïdal (29), y forme un point d'étanchéité statique et divise le filet en un espace creux (12) ouvert vers l'espace à rendre étanche (3) et un espace creux (11) ouvert vers l'espace extérieur (24).

2. Joint à lèvre radiale selon la revendication 1, **caractérisé en ce que** la lèvre d'étanchéité (20) présente, sur le côté frontal situé à l'opposé de l'espace à rendre étanche (3), une lèvre d'étanchéité anti-crasses (32), qui peut être appliquée de façon étanche sur la surface de l'arbre à rendre étanche (4).

3. Joint à lèvre radiale selon l'une quelconque des revendications 1 ou 2, **caractérisé en ce que** les évidements en forme de rainures (9) délimitent les espaces creux (11, 12) avec une section transversale essentiellement triangulaire et le côté situé à l'opposé de l'espace à rendre étanche (3) est essentiellement perpendiculaire à l'axe (13) de l'arbre (4).

4. Joint à lèvre radiale selon l'une quelconque des revendications précédentes, **caractérisé en ce que** la lèvre d'étanchéité (20) présente une épaisseur (30) inférieure ou égale à 1,5 mm.

5. Joint à lèvre radiale selon l'une quelconque des revendications précédentes, **caractérisé en ce que** le rapport, formé par le diamètre de l'arbre à rendre étanche (4) et le diamètre intérieur de la lèvre d'étanchéité (20) non précintrée, vaut de 1,03 à 1,08.

6. Joint à lèvre radiale selon l'une quelconque des revendications précédentes, **caractérisé en ce que** le matériau élastomère est formé par du caoutchouc acrylate nitruré (ACM), du caoutchouc acrylonitrile-butadiène (NBR) ou des polymérisats de fluor (FPM).

7. Joint à lèvre radiale selon l'une quelconque des revendications précédentes, **caractérisé en ce que** la lèvre d'étanchéité (20) présente un deuxième profilage de surface (8) sur la surface située à l'opposé de l'arbre (4).

8. Joint à lèvre radiale selon la revendication 7, **caractérisé en ce que** la section transversale des évidements en forme de rainures (10) dans le deuxième profilage de surface (8) est en forme de U ou identique à la section transversale des évidements (9) dans le profilage de surface (6).

9. Joint à lèvre radiale selon l'une quelconque des revendications précédentes, **caractérisé en ce que** la bague de support (1) est formée en une bague de tôle d'une seule pièce et présente une partie (7) avec une saillie radiale (19), échelonnée par une saillie axiale (18) .

10. Joint à lèvre radiale selon la revendication 9, **caractérisé en ce que** le corps d'étanchéité (2) s'étend sur le côté frontal de la saillie radiale (19) situé vers l'espace extérieur (24) et forme un joint statique vers le boîtier (23) par enrobage (5) de la partie échelonnée (7).

11. Joint à lèvre radiale selon la revendication 10, **caractérisé en ce qu'**un joint avancé (25) et/ou une lèvre anti-crasses (27) est disposé sur le corps d'étanchéité (2) dans la région du côté frontal de la saillie radiale (19).

12. Joint à lèvre radiale selon la revendication 11, **caractérisé en ce que** le joint avancé (25) est un joint anti-poussière et se compose d'un matériau à pores ouverts, notamment de préférence d'un non-tissé.

13. Joint à lèvre radiale selon l'une quelconque des revendications 11 ou 12, **caractérisé en ce que** le joint avancé (25) est assemblé par collage au corps d'étanchéité (2).
